# EUROPEAN PATENT SPECIFICATION

(11) **EP 3 330 131 B1**
(45) Date of publication and mention of the grant of the patent: **13.11.2019**
(21) Application number: 16465558.1
(22) Date of filing: 05.12.2016
(51) Int. Cl.: B60R 11/04

(54) **BRACKET DEVICE, SYSTEM COMPRISING A BRACKET DEVICE AND A SENSOR UNIT, AND A VEHICLE**
KONSOLE-VORRICHTUNG FÜR EINEN SENSOREINHEIT EINES FAHRZEUGS
DISPOSITIF DE SUPPORT POUR UNE UNITÉ DE CAPTEUR DE VÉHICULE

(43) Date of publication of application: 06.06.2018
(73) Proprietor: Continental Automotive GmbH, 30165 Hannover (DE)
(72) Inventor: Lapugean, Alexandru, 300715 Timisoara (RO); Lazar, Adrian-Catalin, 300495 Timisoara (RO)
(74) Representative: Reuter, Andreas

(56) References cited:
- WO-A1-2013/123161
- DE-A1-102016 203 406
- US-A1- 2014 016 919

## Description

The present invention relates to a bracket device for attaching at least one sensor unit, in particular a camera, on a windshield of a vehicle, in particular an automobile. Further the present invention relates to a system comprising said bracket device and a sensor unit and furthermore to a vehicle comprising such a system.

### TECHNICAL BACKGROUND

In the automotive and other industries sensors or electrical/ electronic components are mounted on the windshield using custom designed brackets.

In US 2012/0207461 A1 an in-vehicle camera is provided which has a case and a lens and which is attached in a vehicle interior so that the lens is exposed at a top face of the case and the top face is opposed to a windshield. The in-vehicle camera is attached to the windshield of the vehicle by a bracket. The bracket includes a top board, latches a rear board and two plate springs.

However, such plate springs are difficult to mount and have to be manufacture in a separate manufacturing process.

The document WO 2013/123161 A1 discloses a bracket device according to the preamble of claim 1.

### SUMMARY OF THE INVENTION

Against this background, an objective of the present invention is to provide an improved bracket device comprising at least one sensor unit, for a windshield of a vehicle, an improved system comprising said bracket device and further an improved vehicle comprising said system.

This objective is achieved according to the invention by a bracket device having the features of claim 1 and a system having the features of claim 9 and further a vehicle having the features of claim 13.

Bracket device for attaching at least one electronic component on a windshield of a vehicle, wherein the attachment system comprises:
two receiving and centering sections for receiving and centering the sensor unit, wherein the two receiving and centering sections are provided at opposite sides of the bracket device and adjacent a front end of the bracket device, and
at least a first spring portion provided at a rear end of the bracket device, wherein the first spring portion is designed to apply a first preload force on the sensor unit to push the sensor unit into and against the receiving and centering sections.

The above mentioned bracket device provides a device which allows fixation of a sensor unit as electronic component so that the electronic component cannot be moved unintentionally forward or backward along the bracket device which would otherwise impair the function of the electronic component, such as for example a camera, and could further result in unintended noise or loosening of the electronic component.

The concept underlying the invention is to provide a new bracket device concept which allows attaching an electronic component on a bracket device without requiring additional components such as metal leaf springs and which hold the electronic component in place without the generation of noise due to an unintended movement of the electronic component relative to the camera

Advantageous embodiments and developments of the invention emerge from the additional subordinate claims and from the description with reference to the drawing figures.

According to the invention each receiving and centering section comprises at least an upper or lower front bracket contact portion which is in contact with a corresponding upper and lower front sensor unit contact portion of the sensor unit, when the sensor unit is in its mounting portion on the bracket device. Thus, the sensor unit can securely held in place.

In an embodiment of the invention the first spring portion comprises a rear bracket contact portion which is in contact with a rear sensor unit contact portion to apply the first preload force on the electronic component, when the sensor unit is in its mounting portion on the bracket device. The first spring portion can partially enclose the rear end of the sensor unit and can hold the sensor unit securely in place due to the application of the first preload force.

According to the invention the bracket device comprises two second spring portions, provided at the opposite sides or right and left side of the bracket device and adjacent the first spring portion. Each second spring portion is designed to apply a second preload force on the electronic component to push the electronic component downward or toward the bracket device. Due to the second preload force the sensor unit cannot move unintentionally upwards and downwards or toward and away from the bracket device and its base plate.

According to the invention each second spring portion comprises a recess to receive a portion of the sensor unit. The recess comprises an upper bracket contact portion which is in contact with a corresponding upper sensor unit contact portion, when the sensor unit is in its mounting portion on the bracket device. This also results in that the sensor unit can be held securely in place. In particular the recess prevents that the sensor unit can be moved out of the bracket device, since the portion of the sensor unit, i.e. the first protrusion is enclosed by the walls of the recess.

According to the invention the bracket device comprises a third spring portion which is provided between the two second spring portions. The third spring portion is designed to apply a third preload force on the sensor unit away from the bracket device and against the recess of the second spring portion. Thus the second and third preload forces are applied in opposite directions of the sensor unit and particular its first protrusions so that the sensor unit is securely held in place.

According to the invention the third spring portion comprises a lower bracket contact portion which is in contact with a lower sensor unit contact portion of the sensor unit, when the sensor unit is in its mounting portion on the bracket device. The sensor unit is therefore securely held within the recess of the second spring portion since the sensor unit is in contact with the upper sensor unit contact portion of the second spring portion when the third preload force is applied by the third spring portion.

According to an embodiment of the invention each second spring portion comprises at its outer end a lead-in portion. Such a lead-in portion facilitates insertion of the first protrusions of the sensor unit between the second spring portions and movement of the first protrusions into the recesses of the second spring portion.

In another embodiment of the invention, the sensor unit comprises a sensor housing, wherein the sensor housing comprises on its opposite sides a front protrusion, wherein each front protrusion is received and centered in the corresponding receiving and centering section, wherein each front protrusion comprises the upper and lower front sensor unit contact portion which is in contact with the upper and lower front bracket contact portion of the corresponding receiving and centering section.

In a further embodiment of the invention the sensor housing comprises further on its opposite sides a further or rear protrusion, wherein each further or rear protrusion is received in the recess of the corresponding second spring portion, wherein each further or rear protrusion comprises the upper sensor unit contact portion and the lower sensor unit contact portion.

According to the invention the upper sensor unit contact portion of the protrusion is in contact with the upper bracket contact portion of the recess of the second spring portion and the lower sensor unit contact portion of the sensor unit is on contact with the lower bracket contact portion of the third spring portion, when the sensor unit is in its mounting portion on the bracket device.

In an embodiment of the invention the sensor unit is for example a camera. However, the sensor unit can be any other electronic component suitable to be attached to a windshield by the bracket device.

In another embodiment of the invention a vehicle, in particular an automobile, comprises such a system comprising the bracket device and a sensor unit.

### CONTENT OF THE DRAWINGS

The present invention is explained below in greater detail with the aid of embodiments specified in the schematic figures in the drawings. These are as follows:
- Fig. 1: shows a perspective view of an example of a sensor unit such as a camera;
- Fig. 2: shows a perspective view of an inventive bracket device for mounting a sensor unit as shown in Fig. 1 on a windshield of a vehicle;
- Fig. 3: shows an enlarged view of a part of the bracket device according to Fig. 3;
- Fig. 4: shows another enlarged view of a part of the bracket device according to Fig. 3;
- Fig. 5: shows a cross-sectional view of the bracket device according to Figs. 2-4 and the sensor unit according to Fig. 1;
- Fig. 6: shows another a cross-sectional view of the bracket device according to Figs. 2-4 and the sensor unit according to Fig. 1; and
- Fig. 7: shows a cross-sectional view of the bracket device according to Figs. 2-4 and the sensor unit according to Fig. 1, wherein the sensor unit is in its mounting position on the bracket device.

The accompanying drawings should convey further understanding of the embodiments of the invention. They illustrate embodiments of the invention and clarify the principles and concepts behind the invention in conjunction with the description. Other embodiments and many of the described advantages are apparent with respect to the drawings. The elements of the drawings are not necessarily illustrated true to scale in relation to each other.

In the figures in the drawing, the same elements, features and components, or those serving the same function and having the same effect, are provided with the same reference numerals in each case - unless otherwise specified.

### DESCRIPTION OF EMBODIMENTS

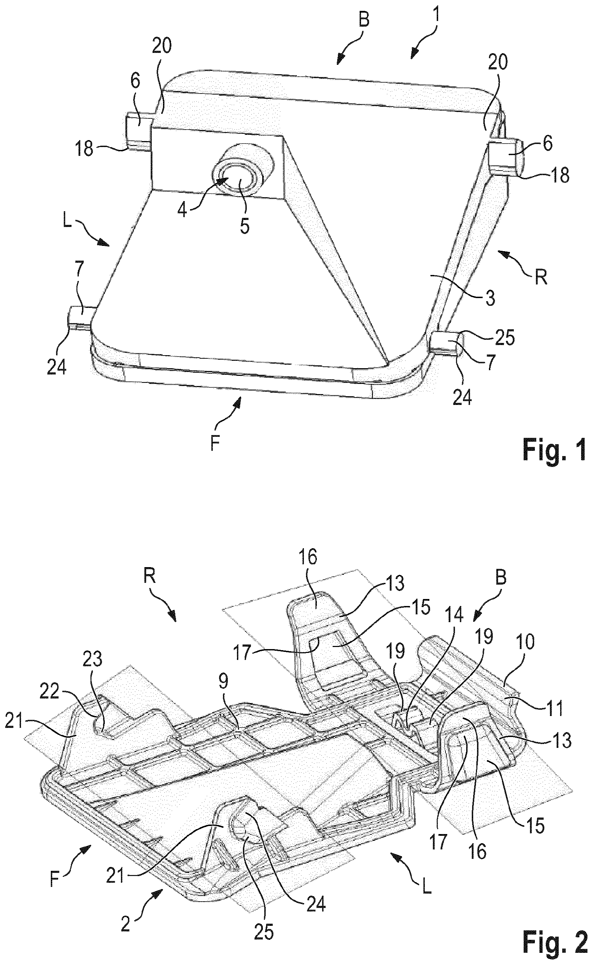

In Fig. 1 a perspective view of an electronic component, such as for example a sensor unit 1, to be attached by a bracket device 2 according to the invention on a windshield of a vehicle, in particular an automobile.

The sensor unit 1 comprises a sensor housing 3 and a sensor means 4 arranged within the sensor housing 3. In the example shown in Fig. 1 the sensor unit 1 is for example a camera comprising a camera housing, wherein a camera lens 5, as part of a sensor means, of the camera is arranged within an opening of the camera housing. However, the invention is neither restricted to a sensor unit or an electronic component nor to a camera as sensor unit 1 but can be applied to all kind of sensor units which are attachable by the bracket device to a windshield of a vehicle, particularly an automobile. In the following the invention will be described based on a camera as an example of a sensor unit or electronic component. In the following the term sensor unit is used but the term electronic component can be used instead.

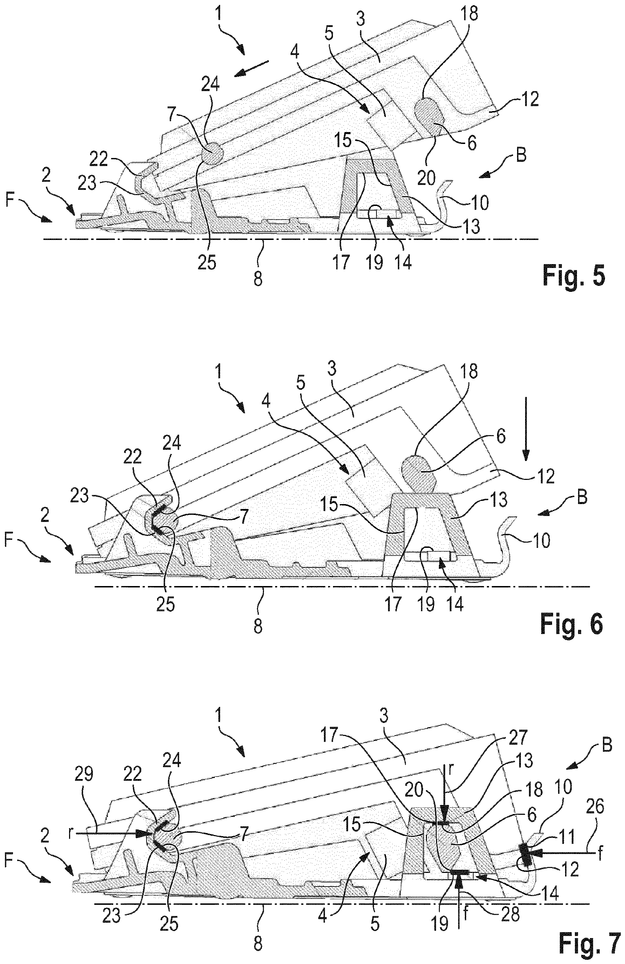

As shown in Fig. 1 and following Figs. 2 to 7 the sensor unit 1 and in particular the sensor housing 3 and further the inventive bracket device 2 in which the sensor unit 1 is received comprises a right side and a left side, a front side and a rear side or back side. The right side of the sensor housing 3 and the bracket device 2 is indicated with "R", the left side is indicated with "L", the front side is indicated with "F" and the rear side or back side is indicated with "B" throughout the figures. Further, in following Figs. 5 to 7, the windshield is illustrated with a dashed line.

The right side and the left side of the sensor unit 1 and its sensor housing 3 are each provided which a first protrusion 6 and a second protrusion 7. In the example shown in Fig. 1, the first protrusions 6 are arranged opposite each other and close to or adjacent to the front side of the sensor unit 1 and its sensor housing 3. Further, each first protrusion 6 shown in the example in Figs. 1 and 5-7 is provided with an upper sensor unit contact portion 18 to contact a corresponding upper bracket contact portion 17 and a lower sensor unit contact portion 20 to contact a corresponding lower bracket contact portion 19.

The second protrusions 7 are also arranged opposite each other and close to or adjacent to the rear side of the sensor unit 1 and its sensor housing 3. Further, each second protrusion 7 shown in the example in Figs. 1 and 5-7 is provided with an upper front sensor unit contact portion 24 to contact a corresponding upper front bracket contact portion 22 and a lower front sensor unit contact portion 25 to contact a corresponding lower front bracket contact portion 23.

The first and second protrusions 6, 7 of the sensor unit 1 and its sensor housing 3 can be identical or different as shown in the example in Fig. 1.

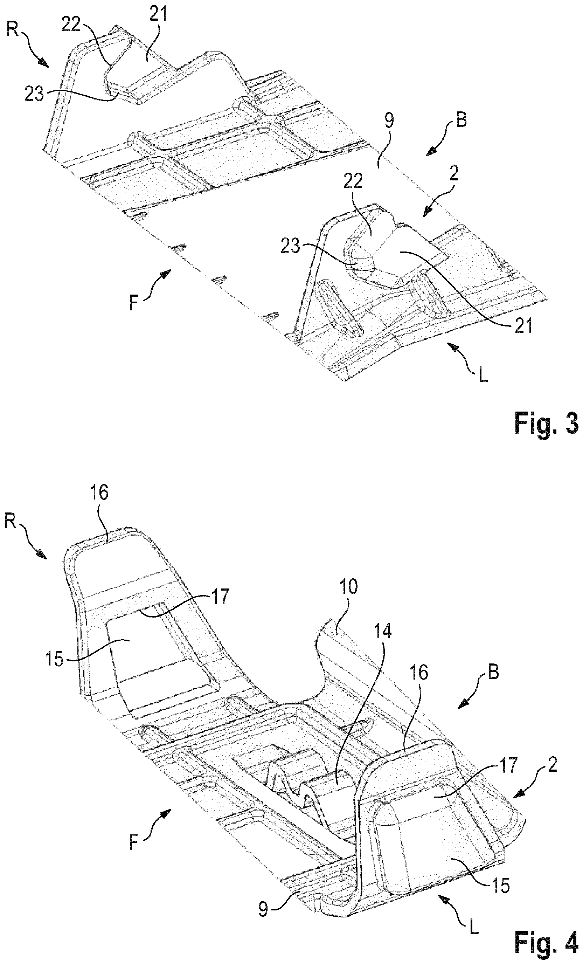

In Fig. 2 a perspective view of an embodiment of the inventive bracket device is shown which is designed to receive and attach a sensor unit 1 as illustrated before exemplary in Fig. 1 on a windshield of a vehicle. Further, in Figs. 3 and 4 enlarged views of parts of the bracket device 2 according to Fig. 2 are shown. Figs. 5, 6 and 7 further, show a cross-sectional view of the bracket device 2 of Fig. 2 when mounting a sensor unit 1, such as a camera, as shown before in Fig. 1, on the bracket device on a windshield 8.

Currently, a multi-function camera (MFC) is mounted on a windshield of a car using a bracket assembly. The bracket assembly must ensure a proper alignment of the camera in the car and needs to allow easy assembly and disassembly of the camera. Further, the bracket assembly has to prevent movement of the camera in the interface to avoid that an unintended camera movement can generate audible noise during operation. To fulfil these requirements the bracket assembly was designed as a rigid part comprising reference surfaces corresponding to the camera reference system. Further, the bracket assembly was provided with elastic elements like snappers and metal leaf springs forming part of the bracket assembly. Other variants replaced the metal leaf springs with integrated plastic springs.

However, the use of metal springs such as leaf springs as additional components results in increased costs and an increased complexity of the assembly. Further, development is more complicated and takes more time. Moreover, the manufacturing process needs to include an additional step of mounting the springs. Furthermore, the validation of the product is more difficult, since more tests are required and the risks of failing is increased.

On the other hand, using plastic springs on a rigid bracket requires a longer developing time, since more time is required for simulation to achieve the right shape and the required elasticity. By incorporating these springs on the bracket, the assembly complexity can be reduced on the one hand. However, on the other hand the complexity of the tool is increased and further the risks during validation are increased.

The invention therefore seeks to provide an improved bracket device 2 for mounting a sensor unit 1 on a windshield 8 of vehicle, in particular an automobile.

As will be described in the following with respect to Figs. 5 to 7, the inventive bracket device 2 provides a new, easy and error resistant mounting and dismounting concept for a sensor unit 1, such as the camera shown in the Figs. 1 and 5-7. According to the invention a relatively flexible bracket device 2 is provided, with a combination of auto guiding features and the body or base plate of the bracket device 2 with flexible fixing elements or flexible portions. According to the inventive bracket device 2, no extra components are required and no fragile and precise snappers are needed.

As shown in Figs. 2 to 4, the bracket device 2 comprises a base plate 9, wherein the base plate 9 forms the bottom portion of the bracket device 2. Further, the bracket device 2 comprises a first spring portion 10, wherein the first spring portion 10 is provided at the rear end of the base plate 9. The first spring portion 10 comprises a rear bracket contact portion 11 which contacts a corresponding rear sensor unit contact portion 12, when the sensor unit 1 and its sensor housing 3 is mounted on the bracket device 2 and has reached its mounting position or end position as shown in Fig. 7. Due to its elasticity and/or flexibility the first spring portion 10 is pushed with its rear bracket contact portion 11 against the rear sensor unit contact portion 12 so that a first preload force 26 is applied to the sensor unit 1 by the first spring portion 10 as indicated with the arrow in Fig. 7 to hold the sensor unit 1 in place and prevents that the sensor unit 1 can move unintentionally rearward. The first preload force 26 results in a corresponding opposite fourth preload force 29, which will be described further below.

Further, the bracket device 2 comprises two second spring portions 13. One second spring portion 13 is provided at the right side of the base plate 9. The other second spring portion 13 is provided on the opposite side or on the left side of the base plate 9. Both second spring portions 13 are arranged opposite each other on the right and left side of the base plate 9.

Further, the bracket device 2 comprises a third spring portion 14. The third spring portion is provided on the base plate between the two second spring portions.

As shown in the example in Fig. 2 both second spring portions 13 are provided on the base plate 9, e.g., next to or adjacent to the rear end or the first spring portion 10.

Each of the second spring portions 13 comprise a recess 15 to receive the first protrusions 6 of the sensor housing 3 and further an optional lead-in portion 16. Each lead-in portion 16 is designed to facilitate insertion of the sensor housing 3 with its first protrusions 6 between the second spring portions 13. After the sensor housing 3 is inserted with its first protrusions 6 between the lead-in portions 16 of the second spring portions 13, the sensor housing 3 can be moved along the lead-in portions until the sensor housing 3 with its first protrusion 6 reaches the corresponding recess 15 of the second spring portion 13. Each first protrusion 6 of the sensor unit 1 is received in the corresponding recess 15 when the sensor unit 1 and its sensor housing 3 is mounted on the bracket device 2 and has reached its mounting position or end position as shown in Fig. 7. The second spring portion 13 and its recess 15 apply a second preload force 26 on the first protrusions 6 downward or towards the bracket device 2.

The recess 15 of each second spring portion 13 comprises an upper bracket contact portion 17 to contact the corresponding upper sensor unit contact portion 18 of the first protrusion 6 of sensor housing 3.

Further, the third spring portion 14 comprises a lower bracket contact portion 19 which contacts a corresponding lower sensor unit contact portion 20, when sensor housing 3 is mounted on the bracket device 2 and has reached its mounting position or end position as shown in Fig. 7.

Due to the elasticity and/or flexibility of third spring portion 14, the third spring portion 14 pushes the sensor housing 3 and its two first protrusions 6 upwards and against the upper bracket contact portion 17 of each recess 15 of the second spring portion 13. Thus, when the sensor housing 3 is mounted on the bracket device 2 and has reached its mounting position or end position as shown in Fig. 7, the lower bracket contact portion 19 contacts the lower sensor unit contact portion 20 and further the upper bracket contact portion 17 contacts the corresponding upper sensor unit contact portion 18 of the first protrusion 6 of the sensor housing 3. The third spring portion applies a third preload force 28 on the bottom surface of the sensor unit 1 and in opposite direction to the second preload force 27 of the second spring portion 13.

Therefore a second preload force 27 is applied on the first protrusion 6 of the sensor housing 3 downwards while a third preload force 28 is applied on the first protrusion 6 upwards or away from the bracket device to hold the first protrusion 6 as shown in Fig. 7. Thus, the sensor unit 1 and its sensor housing 3 are held in place so that it cannot move unintentionally upwards and downwards.

Moreover, the bracket device 2 comprises a receiving and centering section 21 to receive and center the second protrusions 7 of the sensor housing 3 of the sensor unit 1. Each receiving and centering section 21 comprises at least one or as shown in the embodiment, e.g., in Fig. 6 and 7 for example two upper and lower front bracket contact portions 22, 23 to contact the corresponding upper and lower front sensor unit contact portions 24, 25 of the second protrusions 7. The upper and lower front bracket contact portions 22, 23 are further inclined relative to each other in the example shown in Figs. 6 and 7 to form a hopper or funnel to receive and position or center the corresponding second protrusions 7 of the sensor unit 1 and its sensor housing 3.

One of the receiving and centering sections 21 is provided at the right side of the base plate 9. The other receiving and centering section 21 is provided on the opposite side or the left side of the base plate 9. Both receiving and centering sections 21 are arranged opposite each other on the right side and left side of the base plate 9.

Further in the embodiment shown in Figs. 2, 3 and 5 to 7, the two receiving and centering sections 21 are provided on the base plate 9, e.g., next to or adjacent to the front end of the base plate 9.

When the sensor housing 3 is mounted on the bracket device 2 and has reached its mounting position or end position as shown in Fig. 7, the first spring portion 6 at the rear end of the base plate 9 pushes the sensor housing 3 and its second protrusion 7 against the receiving and centering section 21 by applying the first preload force 26. This results in an opposite fourth preload force 28 applied by the receiving and centering sections 21 on the front end of the sensor unit 1. Thus the sensor unit 1 is clamped between the first spring portion 10 and the receiving and centering sections 21 in its mounting positon as shown in Fig. 7. Therefore, sensor unit 1 and its sensor housing 3 is held in place and prevents that the sensor unit 1 can move unintentionally forward and rearward.

The invention describes a new and innovative way to mount a sensor unit 1 such as for example a camera on a bracket device 2 made of plastic and using the elastic and/or flexible spring portions 10, 13, 14 as described with respect to Figs. 5 to 7 in the following:
In Fig. 5 the inventive bracket device 2 and sensor unit 1 is shown. The sensor unit 2 in the example as shown is for example a camera. A camera body, containing a lens assembly 5 is fitted with two pins, i.e. second protrusions 7, comprising e.g. circular or rounded portions 24, 25, in the front and two pins, i.e. first protrusions 6, comprising circular or rounded portions 18, 20, in the back and, located on each side of the camera as fixing features. Said pins or first and second protrusions 6, 7 are used, in particular solely used, to properly align the camera as shown before in Fig. 1 to the car.

The bracket device 2 is designed in such a way that from the back of the base plate 9 the back spring, i.e. first spring portion 13, is extended around the camera.

Besides the bracket field of view another elastic spring 14, i.e. third spring portion, is installed on the base plate 9 as shown before in Fig. 4.

As shown, e.g., in Fig. 3, the front fixing features comprises two receiving and centering sections 21 each comprising for example a front top-bottom centering surfaces, i.e. upper front bracket contact portions 22, and a front side holding surfaces, i.e., other lower front bracket contact portion 23. Further, as shown in Fig. 4, the back fixing features comprises the second spring portions 13, each comprising a recess 15 with a back top holding surface, i.e. upper bracket contact portion 17, and a third spring portions 14 which comprises back side holding surfaces, i.e., a lower bracket contact portion 19. As described before the second spring portions 13 can each comprise an assembly lead in surfaces, i.e., a lead-in portions 16, and can further serves as a quick and easy camera disassembly or release features.

To assemble the camera as an example of a sensor unit 1 to the bracket device 2, it needs to be brought in contact with the front of the bracket device 2 first until the both second or front protrusions 7 of the camera, i.e. sensor unit 1, are touching both surfaces of the front top-bottom centering surfaces, i.e. the upper and lower front bracket contact portions 22, 23 of the receiving and centering sections 21 shown, e.g., in Fig. 5. This aligns the camera to the bracket device 2 in the front and only allows a rotation around the axis of the front or second protrusion 7.

After that, the operator will rotate the back side of the camera body, i.e. sensor housing 3, towards the bracket device 2 so that the other two or first protrusions 6 of the sensor housing 3, i.e. camera housing, from the back will push the two elastics back handles, i.e. the second spring portions 13, apart and in the final position. The two elastic back handles, i.e. second spring portions 13, of the bracket device 2 snap over the first protrusions 6 of the camera housing, i.e., sensor housing 3 to hold the camera in position as shown, e.g. in Fig. 6.

As mentioned before, in Fig. 7 the camera or sensor unit 1 is mounted on the bracket device 2. In this state the bracket back spring, i.e. the first spring portion 10, will push the camera body and the front fixing pins, i.e. the second protrusions 7, of the camera towards the driving direction of the car or front direction of the car against the front top bottom centering surfaces, i.e., the upper front sensor unit contact portions 24 of the receiving and centering sections 21. This preload force will block the sensor unit 1 front-back motion as well as the top-bottom motion in the front. In the back, the lower spring, i.e., the third spring portion 14, will push the camera housing 3 and the back fixing pins, i.e. the first protrusions 6, of the camera against the upper holding surfaces, i.e. upper bracket contact portions 17 of each recess 15 of the second spring portions 13. This preload force will block the top-bottom motion of the camera in the back. For the side direction, i.e. left-right direction, the bracket front and back side holding surfaces, i.e. receiving and centering sections 21, and the lower bracket contact portion, i.e. recess 15, will block the first and second protrusions 6, 7 of the camera housing 3 from moving sideways.

This way, the bracket device 2 will tighten the assembled camera sensor in all directions, leaving no free degrees of freedom and assuring a preload force 26-29 in all directions that prevents the creation of audible noise during operation.

The main advantage of this solution is that the sensor unit, such as a camera, is pressed in all direction, assuring a snug fit of the assembly and also eliminates the small elastic and imprecise elements from the bracket device, like snappers.

Further, no other elements needs to be preassembled or manufactured, like leaf metal springs or wire springs, this bracket device is only one part.

Furthermore, the way of mounting and dismounting the sensor unit, such as a camera, on the bracket device is simple and very intuitive.

Although the present invention has been fully described above by means of preferred embodiments, it is not limited to the above, but may be modified in a number of ways.

### LIST OF REFERENCE NUMERALS

- 1: sensor unit
- 2: bracket device
- 3: sensor housing
- 4: sensor means
- 5: camera lens
- 6: first protrusion
- 7: second protrusion
- 8: windshield
- 9: baseplate
- 10: first spring portion
- 11: rear bracket contact portion
- 12: rear sensor unit contact portion
- 13: second spring portion
- 14: third spring portion
- 15: recess
- 16: lead-in portion
- 17: upper bracket contact portion (of recess of second spring portion)
- 18: upper sensor unit contact portion (of second protrusion)
- 19: lower bracket contact portion (of third spring portion)
- 20: lower sensor unit contact portion (of sensor unit or second protrusion)
- 21: receiving and centering section
- 22: upper front bracket contact portion (of receiving and centering section)
- 23: lower front bracket contact portion (receiving and centering section)
- 24: upper front sensor unit contact portion
- 25: lower front sensor unit contact portion
- 26: first preload force
- 27: second preload force
- 28: third preload force
- 29: fourth preload force

## Claims

1. Bracket device (2) for attaching at least sensor unit (1) on a windshield (8) of a vehicle, wherein the bracket device (2) comprises:
two receiving and centering sections (21) for receiving and centering the sensor unit (1), wherein the two receiving and centering sections (21) are provided at opposite sides of the bracket device (2) and adjacent a front end of the bracket device (2), and
at least a first spring portion (10) provided at a rear end of the bracket device (2), wherein the first spring portion (10) is designed to apply a first preload force (26) on the sensor unit (1) to push the sensor unit (1) into and against the receiving and centering sections (21), wherein the bracket device (2) comprises two second spring portions (13), wherein each second spring portion (13) comprises a recess (15) to receive a protrusion (6) of the sensor unit (1), wherein the recess (15) comprises an upper bracket contact portion (17), **characterized in that** the bracket device (2) further comprises a third spring portion (14) comprising a lower bracket contact portion (19) and wherein the protrusion (6) comprises an upper sensor unit contact portion (18) and a lower sensor unit contact portion (20).

2. Bracket device according to claim 1, wherein each receiving and centering section (21) comprises at least an upper or lower front bracket contact portion (22, 23) which is in contact with a corresponding upper and lower front sensor unit contact portion (24, 25) of the sensor unit (1), when the sensor unit (1) is in its mounting portion on the bracket device (2).

3. Bracket device according to claim 1 or 2, wherein the first spring portion (10) comprises a rear bracket contact portion (11) which is in contact with a rear sensor unit contact portion (12) to apply the first preload force (26) on the sensor unit (1), when the sensor unit (1) is in its mounting portion on the bracket device (2).

4. Bracket device according to any of the preceding claims, wherein the two second spring portions (13) are provided at the opposite sides of the bracket device (2) and adjacent the first spring portion (10), wherein each second spring portion (13) is designed to apply a second preload force (27) on the sensor unit (1) to push the sensor unit (1) downward or toward the bracket device (2).

5. Bracket device according to claim 4, wherein the upper bracket contact portion (17) is in contact with a corresponding upper sensor unit contact portion (18), when the sensor unit (1) is in its mounting portion on the bracket device (2).

6. Bracket device according to any of the preceding claims, wherein the third spring portion (14) is provided between the two second spring portions (13), wherein the third spring portion (14) is designed to apply a third preload force (28) on the sensor unit (1) away from the bracket device (2) and against the recess (15) of the second spring portion (13).

7. Bracket device according to claim 6, wherein the lower bracket contact portion (19) is in contact with a lower sensor unit contact portion (20) of the sensor unit (1), when the sensor unit (1) is in its mounting portion on the bracket device (2).

8. Bracket device according to any one of the preceding claims, wherein each second spring portion (13) comprises at its outer and a lead-in portion (16).

9. System comprising a bracket device according to any one of the preceding claims and a sensor unit (1) mounted on the bracket device (2), wherein the sensor unit (1) comprises further on its opposite sides a further protrusion (6), wherein each further protrusion (6) is received in the recess (15) of the corresponding second spring portion (13), wherein each further protrusion (6) comprises the upper sensor unit contact portion (18) and the lower sensor unit contact portion (20).

10. System according to claim 9, wherein the sensor unit (1) comprises on its opposite sides a protrusion (7), wherein each protrusion (7) is received and centered in the corresponding receiving and centering section (21), wherein each protrusion (7) comprises the upper and lower front sensor unit contact portion (24, 25) which is in contact with the upper and lower front bracket contact portion (22, 23) of the corresponding receiving and centering section (21).

11. System according to claim 9 or 10, wherein the upper sensor unit contact portion (18) of the protrusion (6) is in contact with the upper bracket contact portion (17) of the recess (15) of the second spring portion (13) and the lower sensor unit contact portion (20) of the sensor unit (1) is in contact with the lower bracket contact portion (19) of the third spring portion (14), when the sensor unit (1) is in its mounting portion on the bracket device (2).

12. System according to claim 9, 10 or 11, wherein the sensor unit (1) is a camera.

13. A vehicle comprising a system according to any of claims 9 to 12.

## Patentansprüche

1. Konsolenvorrichtung (2) zum Anbringen wenigstens einer Sensoreinheit (1) an einer Windschutzscheibe (8) eines Fahrzeugs, wobei die Konsolenvorrichtung (2) umfasst:
zwei Aufnahme- und Zentrierabschnitte (21) zum Aufnehmen und Zentrieren der Sensoreinheit (1), wobei die zwei Aufnahme- und Zentrierabschnitte (21) an gegenüberliegenden Seiten der Konsolenvorrichtung (2) und einem vorderen Ende der Konsolenvorrichtung (2) benachbart vorgesehen sind, und
wenigstens einen ersten Federabschnitt (10), der an einem hinteren Ende der Konsolenvorrichtung (2) vorgesehen ist, wobei der erste Federabschnitt (10) dazu gestaltet ist, eine erste Vorspannkraft (26) an die Sensoreinheit (1) anzulegen, um die Sensoreinheit (1) in und gegen die Aufnahme- und Zentrierabschnitte (21) zu schieben, wobei die Konsolenvorrichtung (2) zwei zweite Federabschnitte (13) umfasst, wobei jeder zweite Federabschnitt (13) eine Aussparung (15) zum Aufnehmen eines Vorsprungs (6) der Sensoreinheit (1) umfasst, wobei die Aussparung (15) einen oberen Konsolenkontaktabschnitt (17) umfasst, **dadurch gekennzeichnet, dass** die Konsolenvorrichtung (2) ferner einen dritten Federabschnitt (14) umfasst, der einen unteren Konsolenkontaktabschnitt (19) umfasst, und wobei der Vorsprung (6) einen oberen Sensoreinheitskontaktabschnitt (18) und einen unteren Sensoreinheitskontaktabschnitt (20) umfasst.

2. Konsolenvorrichtung nach Anspruch 1, wobei jeder Aufnahme- und Zentrierabschnitt (21) wenigstens einen oberen oder unteren vorderen Konsolenkontaktabschnitt (22, 23) umfasst, der mit einem entsprechenden oberen und unteren vorderen Sensoreinheitskontaktabschnitt (24, 25) der Sensoreinheit (1) in Kontakt steht, wenn die Sensoreinheit (1) sich in ihrem Befestigungsabschnitt auf der Konsolenvorrichtung (2) befindet.

3. Konsolenvorrichtung nach Anspruch 1 oder 2, wobei der erste Federabschnitt (10) einen hinteren Konsolenkontaktabschnitt (11) umfasst, der mit einem hinteren Sensoreinheitskontaktabschnitt (12) in Kontakt steht, um die erste Vorspannkraft (26) an die Sensoreinheit (1) anzulegen, wenn die Sensoreinheit (1) sich in ihrem Befestigungsabschnitt auf der Konsolenvorrichtung (2) befindet.

4. Konsolenvorrichtung nach einem der vorangehenden Ansprüche, wobei die zwei zweiten Federabschnitte (13) an den gegenüberliegenden Seiten der Konsolenvorrichtung (2) und dem ersten Federabschnitt (10) benachbart vorgesehen sind, wobei jeder zweite Federabschnitt (13) dazu gestaltet ist, eine zweite Vorspannkraft (27) an die Sensoreinheit (1) anzulegen, um die Sensoreinheit (1) nach unten oder hin zu der Konsolenvorrichtung (2) zu schieben.

5. Konsolenvorrichtung nach Anspruch 4, wobei der obere Konsolenkontaktabschnitt (17) mit einem entsprechenden oberen Sensoreinheitskontaktabschnitt (18) in Kontakt steht, wenn die Sensoreinheit (1) sich in ihrem Befestigungsabschnitt auf der Konsolenvorrichtung (2) befindet.

6. Konsolenvorrichtung nach einem der vorangehenden Ansprüche, wobei der dritte Federabschnitt (14) zwischen den zwei zweiten Federabschnitten (13) vorgesehen ist, wobei der dritte Federabschnitt (14) dazu gestaltet ist, eine dritte Vorspannkraft (28) an die Sensoreinheit (1) weg von der Konsolenvorrichtung (2) und gegen die Aussparung (15) des zweiten Federabschnitts (13) anzulegen.

7. Konsolenvorrichtung nach Anspruch 6, wobei der untere Konsolenkontaktabschnitt (19) mit einem unteren Sensoreinheitskontaktabschnitt (20) der Sensoreinheit (1) in Kontakt steht, wenn die Sensoreinheit (1) sich in ihrem Befestigungsabschnitt auf der Konsolenvorrichtung (2) befindet.

8. Konsolenvorrichtung nach einem der vorangehenden Ansprüche, wobei jeder zweite Federabschnitt (13) an seinem äußeren Ende einen Einführabschnitt (16) umfasst.

9. System, das eine Konsolenvorrichtung nach einem der vorangehenden Ansprüche und eine auf der Konsolenvorrichtung (2) befestigte Sensoreinheit (1) umfasst, wobei die Sensoreinheit (1) ferner auf ihren gegenüberliegenden Seiten einen weiteren Vorsprung (6) umfasst, wobei jeder weitere Vorsprung (6) in der Aussparung (15) des entsprechenden zweiten Federabschnitts (13) aufgenommen ist, wobei jeder weitere Vorsprung (6) den oberen Sensoreinheitskontaktabschnitt (18) und den unteren Sensoreinheitskontaktabschnitt (20) umfasst.

10. System nach Anspruch 9, wobei die Sensoreinheit (1) auf ihren gegenüberliegenden Seiten einen Vorsprung (7) umfasst, wobei jeder Vorsprung (7) in dem entsprechenden Aufnahme- und Zentrierabschnitt (21) aufgenommen und zentriert ist, wobei jeder Vorsprung (7) den oberen und unteren vorderen Sensoreinheitskontaktabschnitt (24, 25) umfasst, der mit dem oberen und unteren vorderen Konsolenkontaktabschnitt (22, 23) des entsprechenden Aufnahme- und Zentrierabschnitts (21) in Kontakt steht.

11. System nach Anspruch 9 oder 10, wobei der obere Sensoreinheitskontaktabschnitt (18) des Vorsprungs (6) mit dem oberen Konsolenkontaktabschnitt (17) der Aussparung (15) des zweiten Federabschnitts (13) in Kontakt steht und der untere Sensoreinheitskontaktabschnitt (20) der Sensoreinheit (1) mit dem unteren Konsolenkontaktabschnitt (19) des dritten Federabschnitts (14) in Kontakt steht, wenn die Sensoreinheit (1) sich in ihrem Befestigungsabschnitt auf der Konsolenvorrichtung (2) befindet.

12. System nach Anspruch 9, 10 oder 11, wobei die Sensoreinheit (1) eine Kamera ist.

13. Fahrzeug, das ein System nach einem der Ansprüche 9 bis 12 umfasst.

## Revendications

1. Dispositif de support (2) destiné à la fixation d'au moins une unité de capteur (1) sur un pare-brise (8) d'un véhicule, le dispositif de support (2) comprenant :
deux parties de réception et de centrage (21) destinées à la réception et au centrage de l'unité de capteur (1), les deux parties de réception et de centrage (21) étant prévues sur des côtés opposés du dispositif de support (2) et adjacentes à une extrémité avant du dispositif de support (2), et
au moins une première portion à ressort (10) prévue sur une extrémité arrière du dispositif de support (2), la première portion à ressort (10) étant conçue pour appliquer une première force de précontrainte (26) sur l'unité de capteur (1) afin de pousser l'unité de capteur (1) dans et contre les parties de réception et de centrage (21), le dispositif de support (2) comprenant deux deuxièmes portions à ressort (13), chaque deuxième portion à ressort (13) comprenant un évidement (15) pour recevoir une saillie (6) de l'unité de capteur (1), l'évidement (15) comprenant une portion de contact supérieure de support (17), **caractérisé en ce que**
le dispositif de support (2) comprend en outre une troisième portion à ressort (14) comprenant une portion de contact inférieure de support (19) et la saillie (6) comprenant une portion de contact supérieure d'unité de capteur (18) et une portion de contact inférieure d'unité de capteur (20).

2. Dispositif de support selon la revendication 1, dans lequel chaque partie de réception et de centrage (21) comprend au moins une portion de contact avant supérieure ou inférieure de support (22, 23) qui est en contact avec une portion de contact avant supérieure et inférieure d'unité de capteur (24, 25) correspondante de l'unité de capteur (1), quand l'unité de capteur (1) est dans sa portion de montage sur le dispositif de support (2).

3. Dispositif de support selon la revendication 1 ou 2, dans lequel la première portion à ressort (10) comprend une portion de contact arrière de support (11) qui est en contact avec une portion de contact arrière d'unité de capteur (12) pour appliquer la première force de précontrainte (26) sur l'unité de capteur (1), quand l'unité de capteur (1) est dans sa portion de montage sur le dispositif de support (2).

4. Dispositif de support selon l'une quelconque des revendications précédentes, dans lequel les deux deuxièmes portions à ressort (13) sont prévues sur les côtés opposés du dispositif de support (2) et adjacentes à la première portion à ressort (10), chaque deuxième portion à ressort (13) étant conçue pour appliquer une deuxième force de précontrainte (27) sur l'unité de capteur (1) pour pousser l'unité de capteur (1) vers le bas ou vers le dispositif de support (2).

5. Dispositif de support selon la revendication 4, dans lequel la portion de contact supérieure de support (17) est en contact avec une portion de contact supérieure d'unité de capteur (18) correspondante, quand l'unité de capteur (1) est dans sa portion de montage sur le dispositif de support (2).

6. Dispositif de support selon l'une quelconque des revendications précédentes, dans lequel la troisième portion à ressort (14) est prévue entre les deux deuxièmes portions à ressort (13), la troisième portion à ressort (14) étant conçue pour appliquer une troisième force de précontrainte (28) sur l'unité de capteur (1) dans une direction s'éloignant du dispositif de support (2) et allant contre l'évidement (15) de la deuxième portion à ressort (13).

7. Dispositif de support selon la revendication 6, dans lequel la portion inférieure de contact de support (19) est en contact avec une portion de contact inférieure d'unité de capteur (20) de l'unité de capteur (1) quand l'unité de capteur (1) est dans sa portion de montage sur le dispositif de support (2).

8. Dispositif de support selon l'une quelconque des revendications précédentes, dans lequel chaque deuxième portion à ressort (13) comprend une portion de guidage d'entrée (16) sur son extrémité extérieure.

9. Système comprenant un dispositif de support selon l'une quelconque des revendications précédentes et une unité de capteur (1) montée sur le dispositif de support (2), l'unité de capteur (1) comprenant en outre sur ses côtés opposés une autre saillie (6), chaque autre saillie (6) étant reçue dans l'évidement (15) de la deuxième portion à ressort (13) correspondante, chaque autre saillie (6) comprenant la portion de contact supérieure d'unité de capteur (18) et la portion de contact inférieure d'unité de capteur (20).

10. Système selon la revendication 9, dans lequel l'unité de capteur (1) comprend sur ses côtés opposés une saillie (7), chaque saillie (7) étant reçue et centrée dans la partie de réception et de centrage (21) correspondante, chaque saillie (7) comprenant la portion de contact avant supérieure et inférieure d'unité de capteur (24, 25) qui est en contact avec la portion de contact avant supérieure et inférieure de support (22, 23) de la partie de réception et de centrage (21) correspondante.

11. Système selon la revendication 9 ou 10, dans lequel la portion de contact supérieure d'unité de capteur (18) de la saillie (6) est en contact avec la portion de contact supérieure de support (17) de l'évidement (15) de la deuxième portion à ressort (13) et la portion de contact inférieure d'unité de capteur (20) de l'unité de capteur (1) est en contact avec la portion de contact inférieure de support (19) de la troisième portion à ressort (14), quand l'unité de capteur (1) est dans sa portion de montage sur le dispositif de support (2).

12. Système selon la revendication 9, 10 ou 11, dans lequel l'unité de capteur (1) est une caméra.

13. Véhicule comprenant un système selon une des revendications 9 à 12.
